# EUROPEAN PATENT APPLICATION

(11) **EP 0 564 940 A1**
(43) Date of publication of application: **13.10.1993**
(21) Application number: 93105125.4
(22) Date of filing: 29.03.1993
(51) Int. Cl.: H04N 5/64

(54) **Personal communicator**

(30) Priority: 06.04.1992 US 864095
(71) Applicant: MOTOROLA, INC., Schaumburg, IL 60196 (US)
(72) Inventor: Jachimowicz, Karen E., Goodyear, Arizona 85338 (US); Song, John, Tempe, Arizona 85284 (US); Moyer, Curtis D., Phoenix, Arizona 85044 (US)
(74) Representative: Hudson, Peter David

(57) **Abstract**

Information from any of a plurality of communications media (13-19) is immediately available to an operator for viewing on a personal display (22). The personal display may be head-mounted and the operator instantly apprised when information from any of the communications media is received. The received information is stored and may be viewed in any order desired and may be enhanced in size.

## Description

The present invention pertains to communications systems and more specifically to a personal communications system specifically adapted to an individual.

### Background of the Invention

In a time of relatively dense populations of people and many forms of communications, or different communications media, it is desirable for many individuals to have immediate and personal access to all, or virtually all, the various communications media. Emergency people in the field, such as policemen, firemen, medics, etc., salesmen in the field, and any other individual who needs access to information stored at a central cite can operate more efficiently with immediate access to the stored information. Also, even some individuals in an office, or even at home, may desire immediate access to various communications media and because of the nature of the business may prefer that the information is provided to them personally.

### Summary of the Invention

It is a purpose of the present invention to provide a new and improved personal communicator.

It is a further purpose of the present invention to provide a new and improved personal communicator that allows immediate communication of information to an operator by any of a plurality of different communication media.

The above described problems are solved and the purposes realized by a personal communicator including communications means for receiving communications in each of a plurality of communications media, and display means coupled to the communications means for providing a personal virtual display of received communications.

### Brief Description of the Drawings

Referring to the drawings:
FIG.1 is a simplified block diagram of a personal communicator embodying the present invention;
FIG.2 is a simplified block diagram of another embodiment of a personal communicator embodying the present invention;
FIG. 3 is a block diagram of a direct retinal scan display forming a part of the personal communicator of either FIG. 1 or FIG. 2;
FIG. 4 is a simplified schematic view of a compact virtual image display forming a part of the personal communicator of either FIG. 1 or FIG. 2;
FIG. 5 is a simplified block diagram of a portion of the display of FIGS. 4;
FIG. 6 is a plan view of an LED array forming a part of the block diagram of FIG. 5; and
FIGS. 7 and 8 are perspective and top plan views, respectively, illustrating an embodiment of a waveguide virtual image display forming a part of the personal communicator of either FIG. 1 or FIG. 2;
FIG. 9 is a simplified block diagram of an FED virtual image generator;
FIG. 10 is a simplified block diagram of image enlargement apparatus;
FIG. 11 is a view in perspective of another embodiment of a personal communicator embodying the present invention;
FIG. 12 is a view in perspective of another embodiment of a head mounted personal communicator embodying the present invention.
FIG. 13 is a view in perspective of a hand held display module in accordance with the present invention;
FIG. 14 is a view in perspective of a portable communications receiver embodying the present invention;
FIG. 15 is a simplified view as seen from the line 15 - 15 in FIG. 14;
FIG. 16 is a view in perspective, similar to FIG. 14, of another embodiment of the present invention; and
FIG. 17 is a simplified view as seen from the line 17 - 17 in FIG. 16;

### Description of the Preferred Embodiments

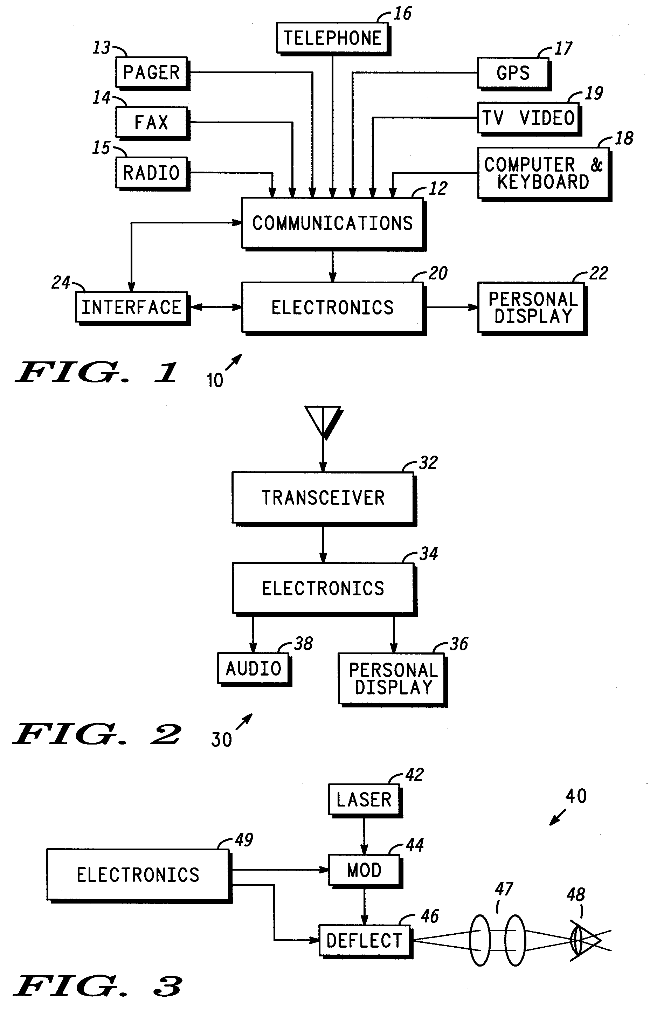

Referring specifically to FIG.1, a simplified block diagram of a personal communicator 10 embodying the present invention is illustrated. Personal communicator 10 includes communications apparatus 12 which, in this embodiment, has seven inputs and an output connected to supply electrical signals to electronics 20. Apparatus 12 contains well known structure and circuits utilized to convert information received on any of the inputs into electrical signals required by electronics 20. In this specific embodiment seven communications media, a pager 13, facsimile 14, radio 15, telephone 16, global positioning system 17, computer 18 and TV video 19 are connected to the seven inputs for purposes of explanation. All or any portion of the seven communications media, or any other communications media desired to be used, such as broadcast television, etc. may be located remote from the operator utilizing personal communicator 10 and the connections to the seven inputs are made by any convenient means such as RF-radio or other free space communications, optical free space communications, fiber optic link, or the more traditional hard-wire.

Since the seven communications media are connected to communications 12 by separate inputs, communications 12 easily detects which communications media is being received and, if desired, supplies an electrical signal to electronics 20 indicative of the specific communications media being received. Further, communications 12 contains a microprocessor or other circuitry that is programmed to receive information from any of the seven communications media and format the information into a single type (or format) of electrical signals usable by electronics 20. For example, facsimile information has a unique format that is generally communicated over telephone lines and which requires compression/expansion circuits to convert for use by a printer or the like. A compression/expansion circuit formed on a single semiconductor chip which is easily incorporated into communications 12, and a complete explanation of the various signal formats, is disclosed in copending application entitled "Data Compression/Expansion for Facsimile Apparatus", US Patent No. 5,196,945, granted 23 March 1993, assigned to the same assignee and included herein by reference.

Communications 12 and electronics 20 cooperate to provide a flow of video information to a personal display 22. Personal display 22 converts the video information to a personal virtual display viewable only by the operator of personal communicator 10. In this specific embodiment an interface 24 controls electronics 20, personal display 22 and communications 12. Communications 12 and/or electronics 20 include a memory in which information received from the various communications media is stored. In one mode of operation of this specific embodiment, personal display 22 provides a visual indicator whenever video information is available for viewing. The operator then uses interface 24 to display which of the information (if there is more than one) that he desires to view first. In a second mode of operation, interface 24 has visual indicators thereon advising the operator of any information available for viewing. The operator then uses interface 24 to view the messages in the order desired.

To provide return information, computer 18 contains a keyboard that can be utilized to prepare return messages. Also, interface 24 contains an audio transducer that is used to provide audio signals to electronics 20, which formats the audio signals for the desired communications media and supplies the properly formatted information to communications 12 for transmission by the communications media selected by the operator at interface 24. Here it should be recognized that converting voice, for example, to a format for facsimile requires that a voice recognition device be included in either communications 12 or electronics 20. In some less sophisticated personal communicators it may be desirable to incorporate at least some of the communications media (e.g.,facsimile) as only one-way communications.

Referring specifically to FIG.2, another embodiment of a personal communicator 30 is illustrated wherein the various communications media are in communication with personal communicator 30 by means of a transceiver 32. Many of the various communications media, including pagers, facsimile, telephone, global positioning system, television broadcast and computers are already formatted for transmission of data by phone lines and radio-phone systems, such as cellular phones. Transceiver 32 is similar to a cellular phone, or may contain the equivalent of a cellular phone, for immediate communications with the various communications media. In some applications, especially where a common group of operators utilize a common base station, transceiver 32 contains different channels for the different communications media and, in some applications, information from all of the various communications media which is destined for one individual are modulated onto a specific frequency assigned to that one individual in the group. That is, each individual in the group has a special frequency only he can receive.

Each of the various communications media has peculiarities in the formatting which allows identification of the specific media, or the base station adds an identifier to the information transmitted so that electronics 34, connected to transceiver 32, detects the specific communications media being received and apprises the operator. As described above, electronics 34 provides video data to a personal display 36, which video data contains a communications media designator that visually apprises the operator of the communications media being received. An audio interface 38, which may be as simple as a microphone and selection switches, is utilized by the operator to select the desired video information and to respond to the extent possible with the system.

Personal display 22 of personal communicator 10 and personal display 36 of personal communicator 30 may be any of a variety of displays including a direct retinal scan display, a compact virtual image display, a waveguide virtual image display, or any other personal display that provides visual information only to the operator of the personal communicator. In a direct retinal scan display, a light beam from a laser or the like, is directly scanned across the retina of an eye, creating an image on the retina without requiring a previous image plane or collection of light from an incoherent image. In direct retinal scanning an image does not necessarily exist in space before it is scanned onto the retina . The light beam "writes" the image directly onto the retina and the first occurrence of an image plane may be at the retina.

FIG. 3 is a block diagram of a direct retinal scan display 40 utilized in either personal display 22 of personal communicator 10 or personal display 36 of personal communicator 30. A laser 42, which may be any of the well known lasers including solid state lasers, such as vertical cavity surface emitting lasers, diode lasers, diode-pumped lasers, etc., supplies a coherent light beam to a modulator 44. Modulator 44 impresses video information onto the light beam generally by modulating the intensity of the light beam as, for example, by providing changes in the power level of laser 42. Depending upon the application, the modulation could be as simple as turning laser 42 off and on, which essentially translates into a digital system. Acousto-optic modulators are one of the preferred modulators for most applications, but other techniques, such as electro-optics and mechanical are completely feasible.

The modulated light beam from modulator 44 is directed to a deflection system 46. A lens system 47 is used to focus the light beam from deflection system 46 into an eye 48. The focal length of lens system 47 is chosen so that the scanning system focal point is within the pupil of eye 48 and the coherent beam focal point is at the retina of eye 48. The purpose of deflection system 46 is to scan the modulated light beam on the retina of eye 48, or "write" an image on the retina. There are many possible configurations for deflection system 46 and lens system 47, depending upon the application of the display and how it is desired to form the image in eye 48. Modulator 44 and deflection system 46 are controlled by electronics and timing circuits 49 to produce an image within a predetermined raster. A more complete description of a direct retinal scan display is provided in copending application entitled "Direct Retinal Scan Display" mailed to the USPTO on 23 March 1992 (also filed as European Patent Application No. 93301847.5) and assigned to the same assignee, which application is included herein by reference.

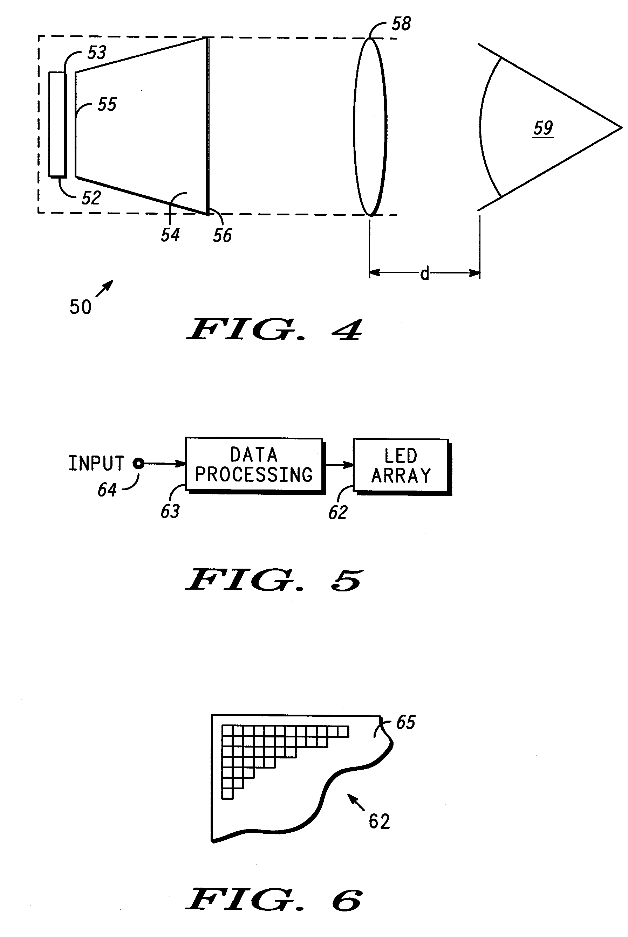

Referring specifically to FIG. 4, a compact virtual image display 50 is illustrated which may be utilized in either personal display 22 of personal communicator 10 or personal display 36 of personal communicator 30. Display 50 includes apparatus 52 for providing a real image on a surface 53. A coherent bundle 54 of optical fibers has a first surface 55 positioned adjacent the surface 53 of apparatus 52 and a second surface 56 defined at the opposite end of bundle 54. An optical system, represented by lens 58, is positioned in spaced relation to surface 56 of bundle 54 and, in cooperation with bundle 54, produces a virtual image viewable by an eye 59 spaced from an aperture defined by lens 58.

Apparatus 52 is illustrated in more detail in FIG. 5 and includes, for example, semiconductor electronics such as a light emitting diode (LED) array 62 driven by data processing circuits 63. Data processing circuits 63 include, for example, logic and switching circuit arrays for controlling each LED in LED array 62. Data processing circuits 63 include, in addition to or instead of the logic and switching arrays, a microprocessor or similar circuitry for processing input signals to produce a desired real image on a device such as LED array 62.

In this specific embodiment LED array 62 is utilized because of the extremely small size that can be achieved and because of the simplicity of construction and operation. It will of course be understood that other image generating devices may be utilized, including but not limited to lasers, LCDs, CRTs, etc. Referring specifically to FIG. 6, a plan view of LED array 62 is illustrated in which the LEDs are formed in a regular pattern of rows and columns on a single semiconductor chip 65. By addressing specific LEDs by row and column in a well known manner, the specific LEDs are energized to produce a real image. Digital or analog data is received at input terminal 64 and converted by data processing circuits 63 into signals capable of energizing selected LEDs to generate the predetermined real image.

It will be understood by those skilled in the art that LED array 62 and semiconductor chip 65 are greatly enlarged in the FIGS. The actual size of semiconductor chip 65 is on the order of a few milli-inches along each side with each LED being on the order of as little as one micron on a side. As the semiconductor technology reduces the size of the chip, greater magnification and smaller lens systems are required. Reducing the size of the lenses while increasing the magnification results in greatly limiting the field of view, substantially reducing eye relief and reducing the working distance of the lens system.

Surface 55 of bundle 54 is positioned adjacent LED array 62 so as to pick up real images generated thereby and transmit the image by way of the optical fibers to surface 56. Bundle 54 is tapered along the length thereof so that the image at surface 56 is larger than the real image at surface 55. The taper in the present embodiment provides an image at surface 56 which is twice as large as the image at surface 55, which is equivalent to a power of two magnification. It will be understood by those skilled in the art that additional magnification (taper) may be included if desired.

The lens system, represented schematically by lens 58, is mounted in spaced relation from surface 56 of bundle 54 so as to receive the image from surface 56, magnify it an additional predetermined amount and create the aperture within which the virtual image is viewed. In the present embodiment, lens 58 magnifies the image another ten times (10x) so that the real image from LED array 62 is magnified a total of twenty times. It will of course be understood that the lens system may be adjustable for focus and additional magnification, if desired, or may be fixed in a housing for simplicity. Because the image received by lens 58 from bundle 54 is much larger than LED array 62, the lens system does not provide the entire magnification and, therefore, is constructed larger and with less magnification. Because of this larger size, the lens system has a larger field of view and a greater working distance. A complete description of a virtual image display is provided in copending application entitled "Compact Virtual Image Display", serial No. 07/767,179, filed 30 September 1991 and assigned to the same assignee (also filed as European Patent Application No. 92115263.3), which application is included herein by reference.

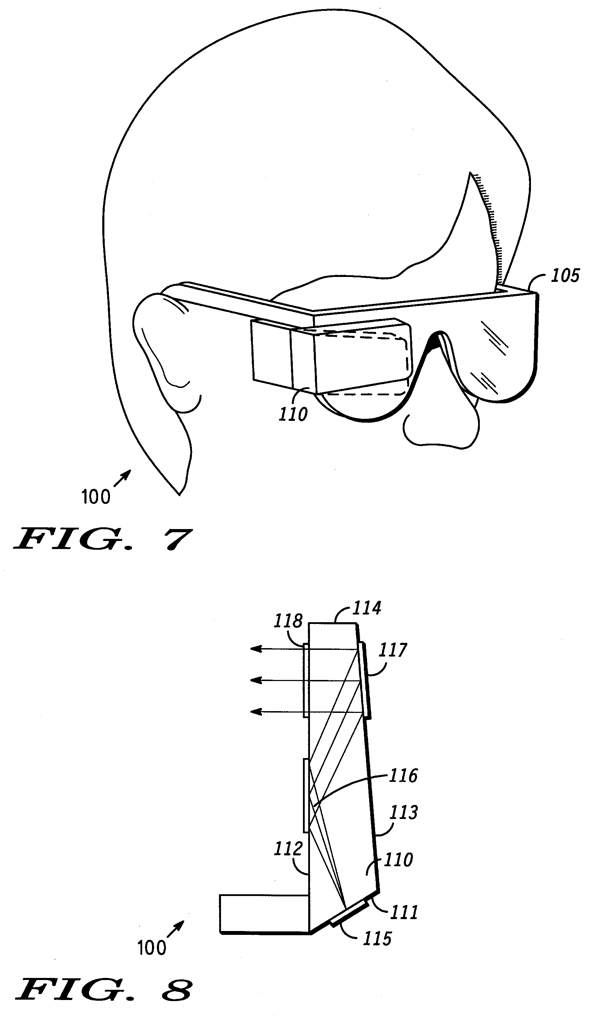

FIGS. 7 and 8 illustrate an embodiment of a waveguide virtual image display 100 wherein display 100 is incorporated into a frame 105 for eye glasses. Frame 105 provides convenient head mounting for display 100 so that hands-free viewing is accomplished. Display 100 includes an optical waveguide 110 which has four sides 111, 112, 113 and 114 specifically shaped to direct light waves to predetermined areas. Apparatus 115 is affixed to side 111 of optical waveguide 110 and provides a real image, utilizing apparatus such as that described above in FIGS. 5 and 6, through an inlet that is generally perpendicular to side 111. Light rays travel along an optical path to a predetermined area on side 112 where a diffraction lens 116 magnifies the image and reflects the light rays to a predetermined area on side 113. A second diffraction lens 117 is affixed to side 113 at the predetermined area to provide additional magnification of the image and to direct the light rays to an outlet in side 112. A final diffractive optical element 118 is affixed to side 112 at the outlet and defines an aperture for viewing the resulting magnified virtual image. Diffractive elements 116, 117 and 118 also provide optical aberration correction for the magnifying optical system 112. Sides 112 and 113 are designed so that light rays emanating from diffraction lens 117 are perpendicular to side 112. As is well known in the art, light rays incident to a surface, which are perpendicular to the surface, provide the most efficient transmission through the surface, so that the design of this specific embodiment is believed to be one of the simplest to construct and the most efficient to operate.

Additional description of this and other embodiments of a waveguide virtual image display are disclosed in copending application entitled "Waveguide Virtual Image Display", serial No. 07/767,180, filed 30 September 1991 (also filed as European Patent Application No. 92115265.8), assigned to the same assignee and incorporated herein by reference.

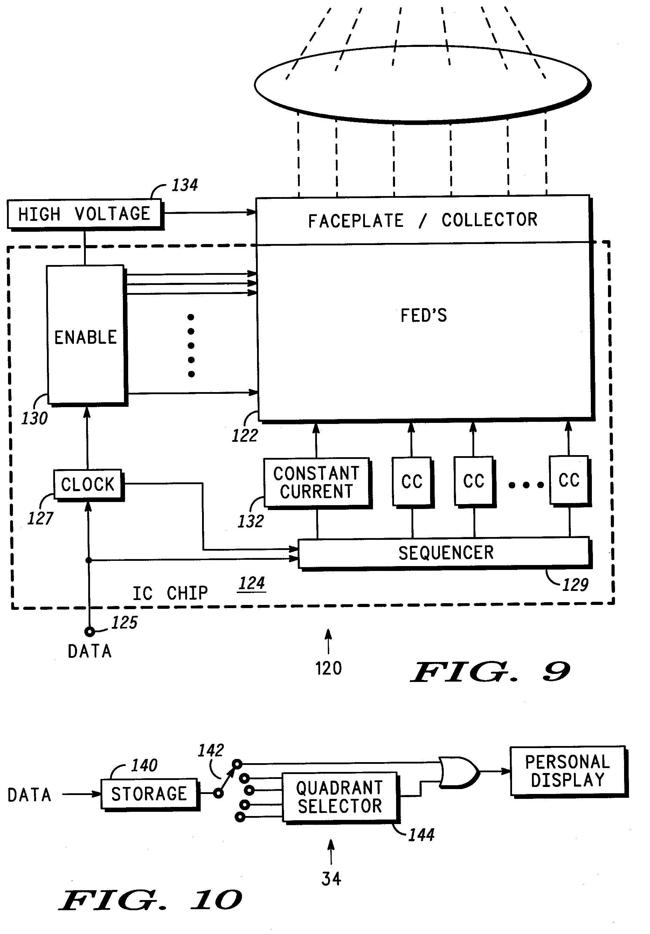

Apparatus 52 of virtual image display 50 and apparatus 115 of waveguide virtual image display 100, both of which provide a real image for the displays, can also be formed with field emission devices (FEDs). Referring specifically to FIG. 9, a simplified block diagram of an FED virtual image generator 120 is illustrated. Generator 120 includes a matrix 122 of pixels organized into rows and columns on a substrate 124, each pixel including at least 5 FEDs for brightness and redundancy. A data input terminal 125 appears as an electrical connection to substrate 124 and is adapted to receive digital data signals in a serial mode from a source, such as electronics 20 or 34 in FIGS. 1 and 2, respectively. It will of course be understood that data could be supplied in parallel, a row at a time, for example, or in any other convenient form.

The data received at terminal 125 is supplied as a synchronizing signal to a clock 127 and to a data input of a sequencer 129. Data applied to sequencer 129 is stored until a complete row of data is available, at which time clock 127 supplies a clock signal to an enable circuit 130 and to sequencer 129. The clock signal causes enable circuit 130 to connect a voltage supply to the control gate of each FED of each pixel in the proper row in sequence. Simultaneously, sequencer 129 uses the row of data stored in memory to control a plurality of constant current sources 132, one for each pixel in a row of pixels. Each constant current source 132 turns on the associated pixel by supplying an appropriate current to the emitters of the FEDS in the pixel. The amount the pixel is turned on, or the amount of current supplied, determines the grey level for that pixel. A high voltage supply 134 is connected to the collector/faceplate to enhance the operation of generator 120, but it will be understood that this is an optional feature. Thus all required operating voltages are applied to an entire row of pixels, simultaneously, each time a clock pulse is generated by synchronous clock 127.

In this specific embodiment there are 720 row connections to enable circuit 130 and 1280 parallel control gate connections through constant current devices 132 to sequencer 129, or a total of 2000 connections to matrix 122, the control electronics for matrix 122 is formed by normal semiconductor manufacturing techniques in substrate 124. Forming matrix 122 and the control electronics in the same substrate not only reduces the connecting procedure to a relatively well known and simple manufacturing technique, but greatly reduces the inter-circuit power requirements. Generally, high voltage supply 134 is constructed exterior to substrate 124, but synchronous clock 127, sequencer 129 and enable circuit 130 are all formed internal to, or as a portion of, substrate 124. In fact, the control electronics may actually be formed in substrate 124 beneath matrix 122, to save on chip size.

Additional description of this and other embodiments of a display are disclosed in copending application entitled "Display for Portable Electronic Devices", serial No. 07/712,826, filed 10 June 1991,(also filed as European Patent Application No. 92305272.4) assigned to the same assignee and incorporated herein by reference.

FIG. 10 illustrates simplified enlargement apparatus, included in electronics 34 of FIG. 2, which is utilized by the operator to enlarge any of the four quadrants an image on the display. Serial and/or parallel data received from transceiver 32 enters storage 140 through a data input and is stored in any predetermined arrangement. Storage 140 supplies the data any number of times desired to review the received information or to provide a continuous, rather than a moving image, in the personal display. A switch 142 is utilized by the operator to select one of five different views, which are: a full view or any of the first, second, third, or fourth quadrants.

When the full view is selected, data from storage 140 is applied directly to a personal display, such as data input 125 of generator 120 in FIG. 9. When the operator desires to look at a portion of the image more closely, the quadrant containing the desired information to be viewed is selected by operating switch 142. The data from storage is then supplied to quadrant selector 144 which selects only the data for the desired quadrant. The data is doubled so that four adjacent pixels receive the same data and operate as a single pixel. For example, if the first quadrant is chosen, the first two pixels in the first row and the first two pixels in the second row all receive the same data so that they operate as a single. Similarly the second two pixels in each of the first two rows operate as a single pixel. Thus the entire display is filled with the first quadrant of the information. It will be understood that similar results could be achieved by operating sequencer 129 and enable circuit 130 in FIG. 9 to activate the various pixels in desired groups. Thus, a zoom or enlargement effect is achieved.

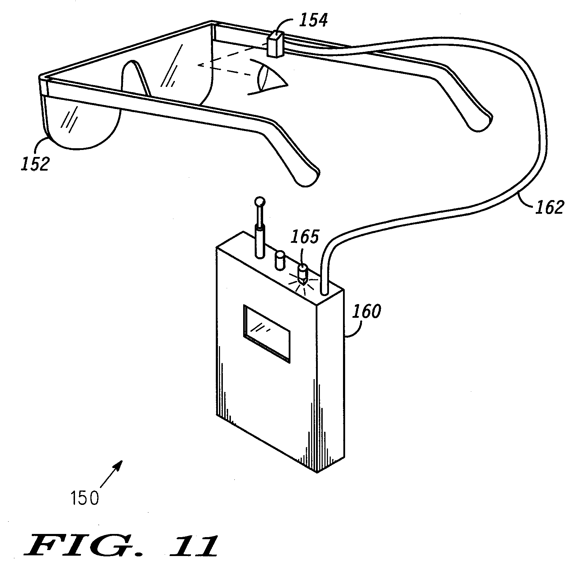

Referring to FIG. 11, another embodiment of a personal communicator 150 is illustrated. In this specific embodiment a frame 152 for eye glasses is utilized to mount a personal display 154 on the head of an operator. As will be apparent presently, frame 152 may contain standard eye glasses for ordinary use, in addition to being used for personal display 154, or may be utilized only for the purpose of personal display 154. Also, the personal display may be any of the various types described in conjunction with FIGS. 3 - 8 but in this specific embodiment is a direct retinal scan display type. A laser source and modulator is contained in a portion 160 of personal communicator 150, which portion 160 is carried in some convenient place on the body, such as a shirt pocket. Portion 160 produces a modulated beam of light which is carried by one or more light fibers 162 to personal display 154. Personal display 154 contains the deflection system and focussing optics and is mounted on one temple of frame 152 so that the output beam of light is reflected by a reflector/glass mounted in/on at least one of the lenses of frame 152, into the eye of the person wearing frame 152. Thus, in this embodiment a reflector, which forms a portion of the lens system (see 47 in FIG. 3), is mounted in some convenient position on frame 152 to direct the modulated, scanned light beam into the eye of the wearer.

In this specific embodiment, portion 160 also includes a transceiver and electronics for communicating with any of a plurality of communications media, as described in conjunction with the apparatus illustrated in FIG. 2. In this specific embodiment the electronics provides a visual indication of the receipt of information to personal display 154 and the operator is apprised of the fact by a very short indicator message being written on the retina of his eye. Simultaneously, one indicator light of a plurality of indicator lights, which in this embodiment are LEDs, is actuated at a switch 165 to provide a continuous indication of the specific communications media carrying the received information. The operator then simply moves switch 165 to the indicated communications media to receive the complete message, or a plurality of messages in a desired order, at personal display 154.

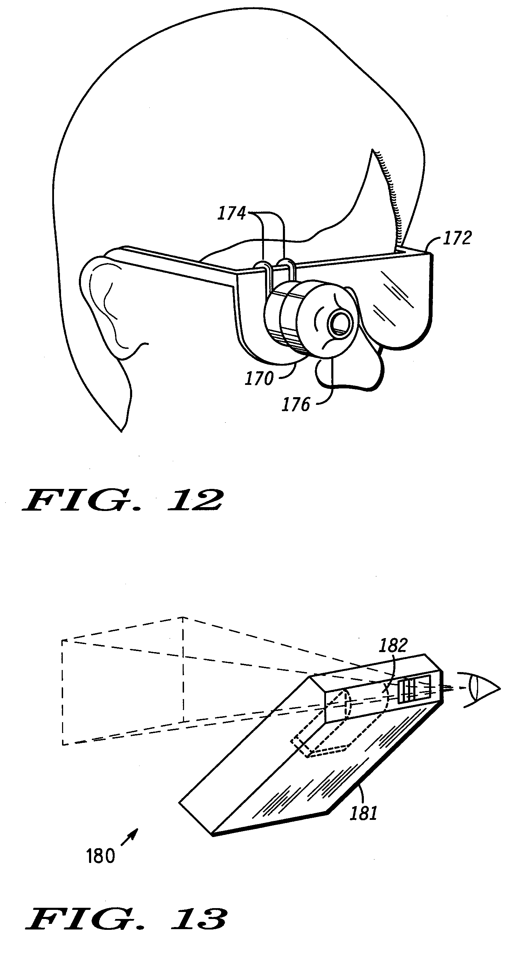

Referring to FIG. 12, another embodiment of a personal communicator 170 is illustrated. In this specific embodiment a frame 172 for eye glasses is utilized to mount personal communicator 170 on the head of an operator. As described above, frame 172 may contain standard eye glasses for ordinary use, in addition to being used for personal communicator 170, or may be utilized only for the purpose of personal communicator 170. In the situation where frame 172 contains eye glasses for ordinary use, personal communicator 170 simply slips on or off of frame 172 by means of a clip 174. Also, the personal display associated with personal communicator 170 may be any of the various types described in conjunction with FIGS. 3 - 8. In this specific embodiment, personal communicator 170 is completely contained within the portion illustrated. Also, to maintain the size of personal communicator 170 small and convenient, in this embodiment information is only received. If it is desired to confirm and or return information, one of the plurality of communications media, such as a portable radio, is utilized directly.

Personal communicator 170 includes adjustable optics, which are adjustable by simply twisting member 176. This adjustment chiefly allows for enlarging the entire image, generally by zooming from a 20 to a 40 magnification, for example. It will of course be understood that any combination of the optical magnification and the electronic enhancement described earlier can be incorporated if desired.

It should be understood that in some applications the entire display will be formed in a single unit or portion and mounted adjacent or in front of the eye of the wearer. In the embodiment of FIG. 11 much of the personal display is remotely mounted to reduce the size and weight of the portion mounted on the temple of frame 152. It should also be understood that the personal display does not have to be head-mounted, but can be an embodiment where the specific personal display utilized is part of a hand-held unit which the user will position in front of the eye for viewing. Typical units of this type are illustrated in FIGS. 13 - 17.

Referring specifically to FIG. 13, a hand held display module 180 is illustrated. Module 180 includes a body 181 containing the communications, electronics and interface and virtual image display optics 182.

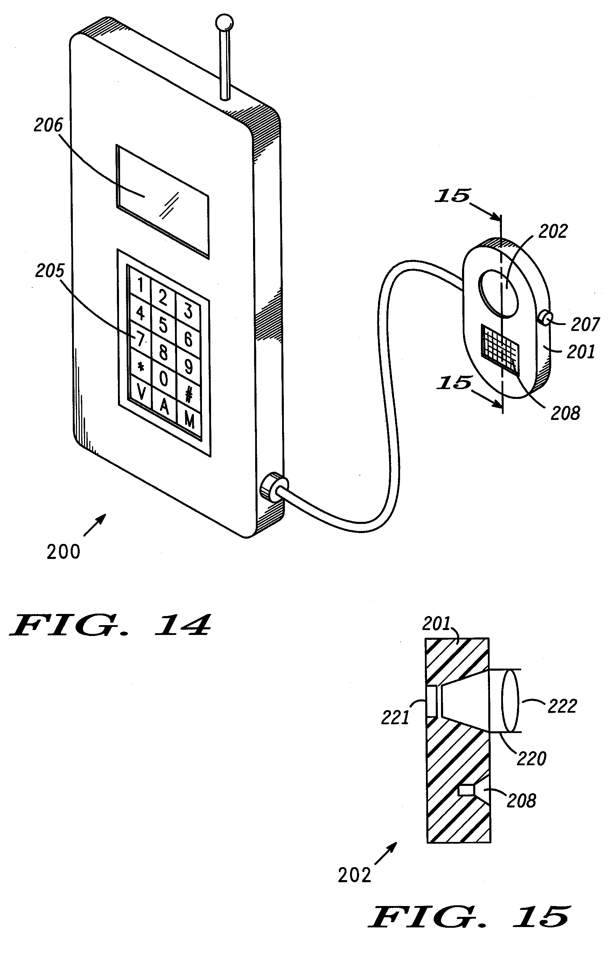

FIG. 14, illustrates a portable communications receiver 200 having a hand held microphone 201 with a miniature virtual display 202 mounted therein It will of course be understood that portable communications receiver 200 can be any of the well known portable receivers, such as a cellular or cordless telephone, a two-way radio, etc. Portable communications receiver 200 includes a control panel 205 for initiating calls and a standard visual display 206, if desired, for indicating the number called or the number calling. Alternately, 206 includes a speaker in addition to or instead of the visual display. Hand held microphone 201 has a push-to-talk switch 207 and a voice pick-up 208.

Referring to FIG. 15, a simplified sectional view of hand held microphone 201 , as seen from the line 15 - 15, is illustrated. Miniature virtual display 202 includes image generation apparatus 221 for providing a real image to a fixed optical system 220, which in turn produces a virtual image viewable by the operator through an aperture 222. Fixed optical system 220 is constructed to magnify the entire real image from image generation apparatus 221, without utilizing moving parts, so that the virtual image viewable through aperture 222 is a complete frame, or picture, which appears to be very large and is easily discernable by the operator. By producing a virtual image from the very small real image of the apparatus 221, fixed optical system 220 is relatively small and adds virtually no additional space requirements to hand held microphone 201. Optical system 220 is constructed with no moving parts, other than optional features such as focusing, zoom lenses, etc.

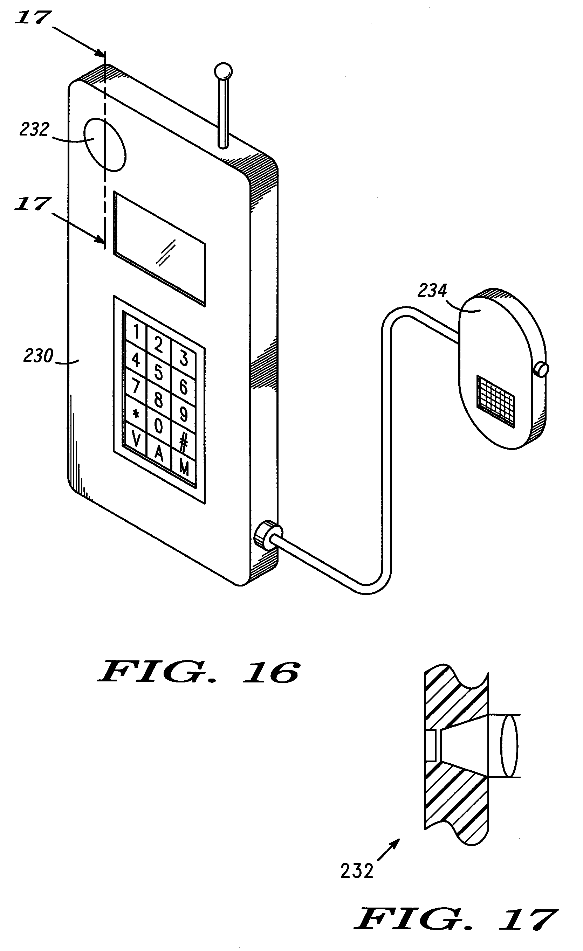

Referring specifically to FIGS. 16 and 17, a second embodiment is illustrated. In this embodiment a portable communications receiver 230 has a miniature virtual display 232 included in the body thereof, instead of in a hand held microphone 234. Hand held microphone 234 is optional and this specific embodiment is desirable for instances where a hand held microphone is not utilized or not available. Miniature virtual display 232 is basically similar to miniature virtual display 202 of FIGS. 14 and 15 and adds very little to the size, weight, or power consumption of receiver 230.

Additional description of this and other embodiments of hand held displays are disclosed in copending application entitled "Receiver with Miniature Virtual Image Display", serial No. 07/767,178, filed 30 September 1991, (also filed as European Patent Application No. 92115264.1) assigned to the same assignee and incorporated herein by reference.

It should also be understood that any of the personal displays described can be used in a binocular, panoramic, and/or stereo mode, where one display is used for each eye. The outside world view can either be blocked, so both eyes see only the image from the displays, or the display image can overwrite the outside world view, creating a composite image. In systems where a composite image is formed, the reflector in frame 152, for example, would be a type of combiner, dichroic or holographic, for example, which directs the image light to the eye while still allowing images from the outside world through the lens.

Thus, personal communicators are disclosed which are adaptable to virtually any application and operator. The personal communicator provides the operator with a personal virtual display of information communicated by any of a plurality of communications media and may include apparatus for responding to the information in at least some of the communications media. Because the personal communicator is extremely small and convenient, it can be utilized by various groups and/or individuals in the field, for example in emergency situations, to receive personal communications that substantially increase the efficiency of the person's work. Also, the personal communicator allows individuals to receive information, that for some reason is personal to them, even when they are in a crowd.

## Claims

1. A personal communicator characterized by:
communications means (13 - 19) for receiving communications in each of a plurality of communications media; and
display means (22) coupled to the communications means for providing a personal virtual display of received communications.

2. A personal communicator as claimed in claim 1 further characterized by electronic means (20) coupled to the communications means (13 - 19) for detecting which one of the plurality of communications media is being received and the electronics means (20) being further coupled to the display means (22) for controlling the display means (22) to display received communications in the detected one of the plurality of communications media.

3. A personal communicator as claimed in claim 2 further characterized in that the electronics means includes a microprocessor.

4. A personal communicator as claimed in claim 3 further characterized in that the microprocessor is programmed to detect a specific format for each of the plurality of communications media.

5. A personal communicator as claimed in claim 1 further characterized in that the communications means includes a portable R.F. radio (15).

6. A personal communicator as claimed in claim 1 further characterized in that the plurality of communications media include a pager (13), facsimile (14), radio (15), telephone (16), global positioning system (17), TV video (19) and computer (18).

7. A personal communicator as claimed in claim 1 further characterized in that the display means includes a virtual display (50).

8. A personal communicator as claimed in claim 1 further characterized in that the display means includes a direct retinal scan display (40).

9. A personal communicator as claimed in claim 1 further characterized in that the display means includes a head mounted display (100).

10. A personal communicator as claimed in claim 1 further characterized in that the display means is a hand held module including substantially all of the display means (180).
